# EUROPEAN PATENT APPLICATION

(11) **EP 2 189 700 A2**
(43) Date of publication of application: **26.05.2010**
(21) Application number: 09004340.7
(22) Date of filing: 26.03.2009
(51) Int. Cl.: F16L 21/035, F16L 25/00

(54) **Hydraulic sealing system for jointing spiral tubes**

(30) Priority: 25.11.2008 IT MI20082097
(71) Applicant: Industrie Polieco - M.P.B. S.R.L., 25046 Cazzago S. Martino (BS) (IT)
(72) Inventor: Luigi, Tonelli, Cortefranca (BS) (IT)
(74) Representative: Jaumann, Paolo

(57) **Abstract**

The object of the present invention regards a hydraulic sealing system for jointing two spiral tubes (10). The sealing system according to the this invention is characterized by the fact of comprising a hydrophilic sealing element (40) set into the cup (11) of said first spiral tube, which fits into the female end (20) of a second spiral tube.

## Description

The present invention concerns a hydraulic sealing system to improve the sealing of spiral tube joints.

As known, spiral tubes are employed for producing non-pressurized, buried discharge ducts. The spiral tubes are of a double-walled type and present a corrugated or smooth outer profile and a smooth internal wall, so as to ease the flow passing through the interior of the tube.

In particular, even better known and commonly employed are spiral tubes made of high density polyethylene, conforming to the current European standards in the trade, especially EN 13476-1 and DIN 16961.

The critical point of every sewage duct is represented by the jointing points between the tubes forming the duct. In order to achieve the utmost reduction in the number of joints, the spiral tubes of the subject type are generally produced in sections of 6 - 12 meters length.

To this date, two alternative methods have been employed for realizing the joints between two spiral polyethylene tubes.

The first method is based on (head-to head or electrical fusion) welding, which consists in welding together the facing ends of two tubes. This system is actually rarely used for spiral polyethylene tubes, because the operation demands specialized labor that makes the pipe laying more expensive.

The second known and to this date most widely employed method for jointing two spiral tubes is the so-called cup-and-gasket type method.

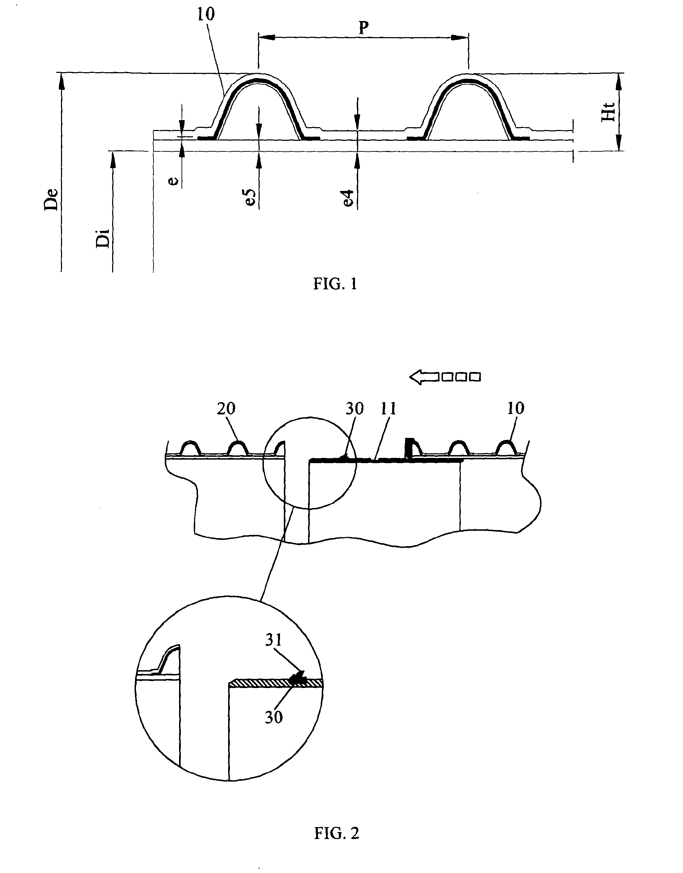

An example of this jointing system is given in Fig. 2 in the enclosed drawings.

The cup-and-gasket jointing method is implemented according to European reference guidelines that establish the lengths and thicknesses of the elements involving the connection.

The gasket of the cup-type jointing system is mainly produced from EPDM (butadiene-ethylenepropylene terpolymer) which offers, at limited cost, fair mechanical properties, good temperature and polar solvent resistance, inertness toward oxidation and, of foremost interest for the application under consideration here, a resistance against chemical agents in sewage that is comparable to that of polyethylene.

As known, the EPDM gasket in the cup-gasket system is fitted into the hollow present in the cup. This gasket presents a profile characterized by a deformable lip, as shown in Fig. 2 of the attached drawings. By an arrow, Fig. 2 also shows the direction of the relative motion of the cup-type ending of the tube with respect to its cup-free ending. As shown in Fig. 2, the gasket's protruding lip must, next to the tube's internal wall, be turned so that its bending can occur in agreement with and as shown in the figure and in accordance with the purpose set up when designing the gasket's profile. In this manner, when realizing the joint, the lip is squashed by the inner portion of the spiral tube. The squashing of the gasket lip is essential for the proper sealing of the gasket in question.

The particular profile and the gasket's position, as well as the cup's size, warrants that during the joint's assembling phase, the lip of the gasket flexes without damage, thus ensuring an optimal sealing of the joint.

The cup-type joint is produced through operations that demand a few precautions to avoid damaging the parts ensuring the jointing seal. These operations are well known to the specialist in the trade and include the lubrication of the gasket and of the tube's interior, and the subsequent insertion of the cup-free portion into the cupped portion through an axial pushing action, while avoiding impacts or the use of excessive forces capable of damaging the gasket or the relative holding sleeve.

In order to complete the picture of the sealing system in question, it is worth recalling that in a sealing process the pipe-lying operation plays an equally important role. In is in particular a must, to perform the laying operation to the best of the art, it is especially important to properly carry out the procedure consisting in setting up a fixed bed of gravel and sand with a thickness of at least 10 cm, to prevent the summit of the tube from resting directly on the excavated soil, to utilize a filler material around the tube having a grain size capable of aiding the material to penetrate into the corrugations of the tubes, and to have the material fill out the excavation to a thickness of about 40 cm above the extrados of the tube, before covering the trench with embankment material.

Even where this operation is done with utmost care and the laying operation is performed in accordance with the criteria outlined here and familiar to the specialist in the trade, and despite the fact that the entire tube, cup and gasket system is subjected to a range of tests to evaluate the system's hydraulic sealing capacity to the reference standards, in practice certain defects capable of compromising the system's hydraulic seal may occasionally occur.

It has especially been noted that, barely days after completing the installation, some sealing problems may arise in the hydraulic system, namely losses or infiltrations.

The cause of these defects in the sealing of the joints can be charged to an imperfect execution of the joint as well as to inexperience of the firms handling the installation of the pipes. It is nevertheless obvious, from the foregoing, that the cup-type sealing employed to this date is affected by numerous variables subject to human error, and that running up against such errors is anything but infrequent.

The presence of losses and infiltrations in the joints is naturally a most unwelcome occurrence.

In the case of a sewage network, for instance, any losses to the outside next to these joints may involve a high risk of polluting the terrain and aquifer layers. In case of a utility water network, the eventual losses may cause localized sagging at the point of the joints, a sagging which may naturally and even gravely compromise the stability of the cover soil.

A seepage of water from the pipe's outside to its inside is likewise highly undesirable.

Infiltrations of this kind may cause an increased flow of liquids to the treating plant and a simultaneous dilution of the polluting charges. This may occasion operating problems in the treating plants that are tied into the hydraulic system, thus compromising the plants' treating capacity. As a consequence of such reduced plant efficiencies, a worsening may arise in the quality of the effluents that the plants are discharging to public surface waters.

In both cases of losses or infiltrations, an imperfect seal of the hydraulic system at the tube joints is a drawback fraught with serious consequences and absolutely to be avoided; the jointing systems known at the present state of the art are unfortunately incapable of averting this.

The primary task of the present invention is therefore to provide a hydraulic sealing system capable of improving the sealing of the present system of jointing spiral tubes, and of allowing a resolution of the problems outlined above and left untouched by the systems heretofore known.

Within the context of this task, a scope of the present invention is to provide a sealing system for spiral tube joints capable of achieving a leak-proof seal against both hydraulic losses and infiltrations of waters from the outside to the inside of the sewage system.

Again, a scope of the present invention is to furnish a sealing system for the joints of corrugated or spiral tubes to provide the workforce with the same assembling and installing duties of the traditional systems currently in use, so as not to complicate their procedures any further, and to avoid a need to train the labor force in handling a novel system.

A further scope of the present invention is to furnish a sealing system for spiral tube joints, allowing the influence of human error to be eliminated from pipe jointing and laying operations.

This task and these and other scopes, which will become clearer after a description of a preferred form of embodiment of the present invention, are achieved through to a hydrophilic sealing element added to an EPDM gasket, to be set into the second cavity of the spiral tube cup that is inserted into the second spiral tube.

Further characteristics and advantages of the present invention will become clearer in the detailed description to follow, as offered in an exemplifying and non-limiting manner and illustrated in the attached figures, wherein:
Fig. 1 shows, in a longitudinal cross section with a vertical plane, a typical spiral tube profile according to the known state of the art;
Fig. 2 shows, again in a longitudinal cross section with a vertical plane, a jointing system constituted of a cup welded to a tube and gasket of a traditional type, which highlights the particular profile of the gasket;
Fig. 3 shows, again in a longitudinal cross section, the same cup-and-gasket jointing system of Fig. 2, where the spiral tube fitted with a cup is connected to the second spiral tube and the gasket lip is squashed as required for a proper seal;
Fig. 4 shows, again in a longitudinal cross section with a vertical plane, the sealing system for the jointing of spiral tubes according to the present invention, constituted of the EPDM gasket and the hydrophilic cord positioned in the cavities of the cup;
Fig. 5 shows, again in a cross section, the sealing system for a spiral tube jointing according to the present invention, in an assembled configuration and in an operating pipe condition;
Fig. 6 shows, again in a cross section, the sealing system for a spiral jointing according to the present invention, in an operating condition.

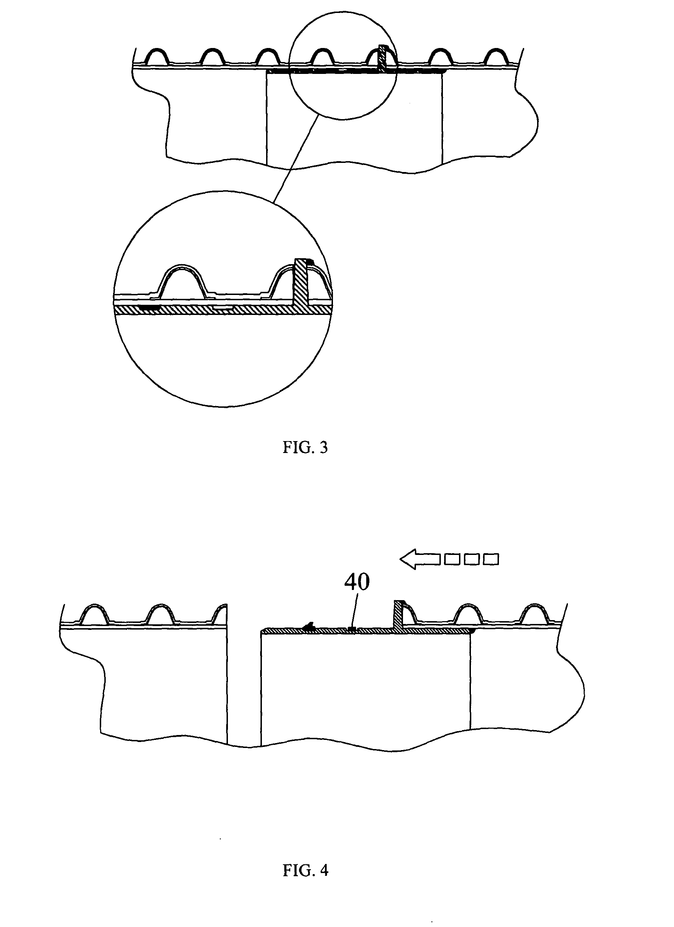

According to the preferred form of embodiment illustrated in the mentioned figures for exemplifying purposes, the same refers to sealing system for the jointing of spiral tubes wherein the junction is formed by a cup-and-gasket of the form shown in Fig. 2 and 3.

The system provides that the junction is to occur between a spiral tube generically designated by the reference number 11 and a second adjacent tube.

Fig. 2 shows the first spiral tube welded to the cup 11 and the second adjacent tube, set up one beside the other but not yet connected. The sealing system comprises an annular gasket 30 made of EPDM. This annular gasket is set into the cavity of the cup 11 of the spiral tube 10 that follows the head, meaning the starting rim. The annular gasket 10 presents, in a cross section with a vertical plane as seen in the figures, a profile fitted with a lip 31 which is projecting toward the outside of the spiral tube profile 10, so as to optimize the sealing of the joint.

As shown in particular in the subsequent Fig. 3, the lip 31 of the annular gasket 30 deforms while folding back over the gasket, once a junction is established between the two facing tubes by inserting the first spiral tube 10 inside the second tube 20. Thanks to the elastic characteristics of the material the gasket 30 is made of, the lip 31 tends to revert to its position in the non-deformed condition of Fig. 2, by exerting an elastic force against the internal wall of the tube 20, which ensures that the lip 31 tightly closes the gap between the inner surface of the spiral tube 20 and the outer surface of the cup 11.

With particular reference to Fig. 4, the sealing system according to the present invention comprises a further hydrophilic gasket element indicated by the reference number 40. This further hydrophilic element 40, which also has an annular shape so as to cover the cup's full perimeter, is advantageously inserted into the cavity immediately adjacent the EPDM gasket 30. The sealing element 40 is for example formed of a hydrophilic rubber; in particular, a butylic material may be used to realize such an element.

A characteristic of the hydrophilic sealing element is its ability, upon contact with a liquid, to expand while increasing its volume to over thrice the original volume. Thanks to the behavior of the material, the sealing element 40 is, in contact with water, capable of expanding until it occupies the entire space at its disposal between the inner wall of the spiral tube 20 and the outer wall of then cup 11.

The barrier achieved by the sealing element 40 turns out to be effective both against the losses of liquids from the outside toward the inside of the tube and against infiltrations of liquids from the outside to the inside of the joint.

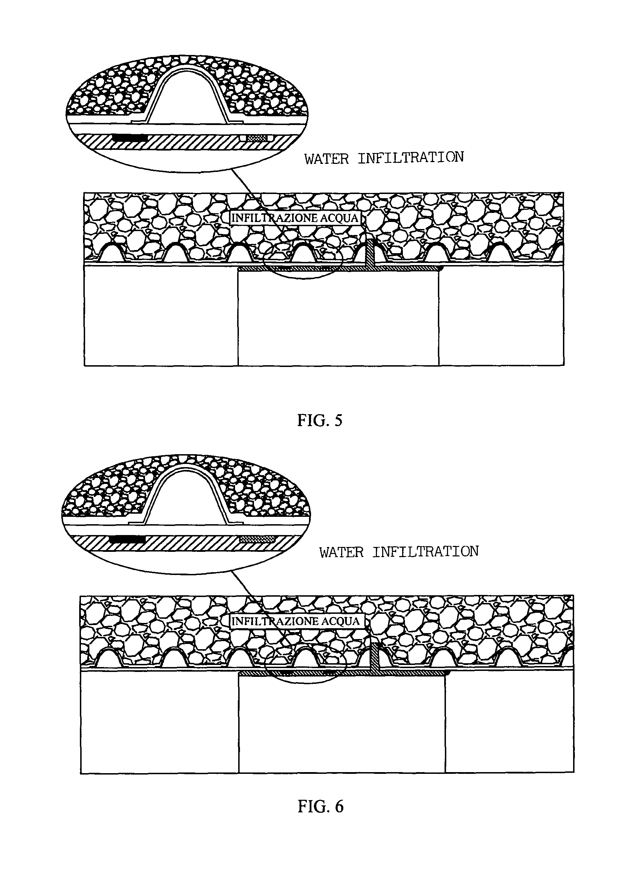

With particular reference to the situation shown in Fig. 5, where water is present inside the annulus between the spiral tube and the cup as a result of fluid losses from the tube toward the outside, or of an infiltration of water from the surrounding terrain toward the inside of the joint, the sealing element 40 expands while increasing in volume in contact with the water that has seeped into the space between the tube 20 and the cup 11. As a result of this expansion, a configuration is achieved as shown in Fig. 6, where the sealing element 40 occupies said annulus between the tube and the cup, thus realizing an optimum sealing of the joint.

The hydrophilic sealing element 40 may appropriately present a rectangular cross-section, as shown in the figures. In particular, the section's dimensions must not be such as to exceed the thickness of the EPDM gasket, so as to avoid being a hindrance when engaging the cup into the second tube.

It has thus been shown that the sealing system according to the present invention allows achieving the desired advantages and to overcome the drawbacks left unsolved by the systems already known at the state of the art.

In particular, it has been shown that the sealing system according to the present invention allows achieving a seal that is perfectly tight against both hydraulic losses and infiltrations of water from the outside toward the inside of the sewage system.

The sealing system according to the present invention and the exposition made up to this point is also extremely simple to realize.

Again, the system's extreme simplicity allows it to be assembled and laid down without additional complications for the workforce, meaning there will be no increases in installation costs and no need to train specialized labor.

Moreover, it has been shown that the sealing system according to the present invention allows eliminating the harmful effect of human error while jointing and laying the tubes, thus allowing it to eliminate all losses and infiltrations associated with a lack of experience in the assembling and/or laying operations.

The sealing system according to the present invention thus proves to be suitable for simply and effectively resolving the known drawbacks consisting of the losses and infiltrations of whatever origin afflicting the systems. Numerous modifications may be applied without abandoning the range of protection of the present invention.

The range of protection of the claims is therefore not to be limited by the illustrations or preferred forms of embodiment shown in the exemplifying description; the claims are to be rather intended as comprising all the characteristics of novelty capable of being derived from the present invention, including all characteristics that would be viewed as being equivalent by a specialist in the branch.

## Claims

1. Sealing system of a cup-type (11) and annular gasket type (30) for jointing two spiral tubes (10 and 20) where said annular gasket (30) is inserted into a seat of the cup (11) of a first one of said spiral tubes (20) to achieve a junction of said tubes, **characterized by** the fact that it further comprises a hydrophilic annular sealing element (40) also set into a seat of the cup type portion (11) of said spiral tube.

2. Sealing system according to the previous claim, **characterized by** the fact that said annular gasket (30) is set into the cavity of the cup (11) of said first spiral tube (10) and that said hydrophilic sealing element (40) is positioned on said cup (11) in the cavity immediately adjacent to said gasket (30).

3. Sealing system according to any of the previous claims, **characterized by** the fact that said annular gasket (30) is made of EPDM or similar material.

4. Sealing system according to the previous claim, **characterized by** the fact that said hydrophilic sealing element (40) is made of hydrophilic rubber.

5. Sealing system according to the previous claim, **characterized by** the fact that said hydrophilic sealing element (40) is made of butylic material.

6. Sealing system according to the previous claim, **characterized by** the fact that said hydrophilic sealing element (40) is an annular element inserted into said cavity of said cup (11) and covers the full circumferential perimeter of said cup (11) set into said cavity.

7. Sealing system according to the previous claim, **characterized by** the fact that said hydrophilic sealing element (40) presents a cross section with a vertical plane having an essentially rectangular profile.
